# FASCICULE DE BREVET EUROPEEN

(11) **EP 0 827 421 B1**
(45) Date de publication et mention de la délivrance du brevet: **28.08.2002**
(21) Numéro de dépôt: 96916197.5
(22) Date de dépôt: 13.05.1996
(51) Int. Cl.: B01J 20/00, B01D 15/00, B09B 1/00, C02F 1/00

(54) **CENDRES D'ORIGINE CHARBONNIERE APPLIQUEES AU TRAITEMENT DE DIVERS MILIEUX ET INSTALLATION DE MISE EN OEUVRE**
KOHLENASCHE ZUR BEHANDLUNG VON VERSCHIEDENEN MEDIEN UND EINRICHTUNG ZUR AUSFÜHRUNG
COAL ASHES USED FOR TREATING VARIOUS MEDIA AND FACILITIES FOR USING SAME

(30) Priorité: 19.05.1995 FR 9505968; 14.02.1996 FR 9601796
(43) Date de publication de la demande: 11.03.1998
(73) Titulaire: SURSCHISTE, 59500 Douai (FR); Gleizes, Raymond Marc Xavier, 95680 Montlignon (FR)
(72) Inventeur: GLEIZES, Raymond, F-95680 Montlignon (FR)
(74) Mandataire: Sauvage, Renée
(86) Numéro de dépôt international: FR9600722
(87) Numéro de publication internationale: WO96036434

(56) Documents cités:
- EP-A- 0 337 047
- US-A- 4 226 630
- US-A- 4 472 198
- US-A- 5 143 481
- PATENT ABSTRACTS OF JAPAN vol. 18, no. 371 (C-1224) & JP,A,06 099161 (TAISEI), 12 Avril 1994,

## Description

La présente invention concerne le traitement de milieux liquides, semi-liquides ou solides et en particulier de milieux contenant des métaux lourds, lesquels peuvent se trouver sous forme d'hydroxydes.

Depuis plusieurs années, le traitement des déchets domestiques et industriels a fait l'objet d'une attention particulière de la part des organismes de recherche et de l'industrie, en raison d'impératifs sanitaires et environnementaux, toujours croissants. On a ainsi cherché à améliorer, entre autres, les procédés de traitement des eaux usées, y compris celui des boues résiduaires qu'elles produisent.

En ce qui concerne le problème de l'élimination des boues résiduaires, un procédé classique consiste à les épaissir, puis à les stabiliser, soit par digestion aérobie, soit par minéralisation anaérobie, de façon à oxyder les matières organiques qu'elles contiennent. Au cours d'étapes suivantes, elles sont soit déshydratées, soit incinérées, soit mises en décharge ou réutilisées, par exemple dans l'agriculture.

Comme exemples de boues résiduaires, on peut citer les boues de stations d'épuration et les boues industrielles, telles que les boues issues d'installations de traitement de surfaces, notamment d'installations de galvanoplastie.

Jusqu'à présent, l'étape de dessiccation des boues issues de stations d'épuration, qui traitent des eaux usées ménagères mélangées à des eaux pluviales et, éventuellement, à des eaux industrielles, a été principalement mise en oeuvre à l'aide de chaux, ce qui permet d'atteindre un taux de siccité d'environ 22 à 25% après passage dans un décanteur et un filtre, tel qu'un filtre-presse ou un filtre à bandes. Or, ce procédé connu se révèle inadapté aux nouvelles normes d'évacuation en vigueur, qui exigent un taux de siccité supérieur à 35% et une absence de lixiviation des polluants, en particulier des métaux lourds. De plus, cette technique ne permet pas de lutter contre les odeurs de ces boues, qui peuvent constituer une gêne importante pour les populations environnantes. Des problèmes analogues se posent vis-à-vis des boues issues de traitements physico-chimiques, dans les ateliers de traitement de surfaces, par exemple de galvanoplastie. Ces boues ont en effet un taux de siccité de l'ordre de 5% à la sortie du décanteur et ne dépassant pas, ensuite, 20 à 22% après passage dans des filtres-presses.

Il existe donc un besoin en un procédé qui permette de remédier aux inconvénients précités de l'art antérieur.

Une solution a été proposée dans la demande de brevet européenne n° 0 337 047 (réputée retirée) pour détoxiquer des milieux liquides et solides en éliminant les métaux lourds qu'ils contiennent. Cette solution consiste à utiliser une matière adsorbante active issue d'une oxydation de particules d'alumino-silicates anamorphosés provenant de résidus charbonniers. L'oxydation peut, par exemple, être effectuée par grillage à l'air dans un four à lit fluidisé, à une température qui est décrite comme étant comprise entre 350 et 800°C. La matière adsorbante active est préparée par granulation des cendres volantes ainsi obtenues, lesquelles ont initialement une granulométrie telle que 34 à 45% d'entre elles ont un diamètre inférieur à 100 µm. Les granulés sont ensuite utilisés comme lit de filtration dans une colonne de percolation.

Dans la pratique, cependant, le procédé objet de cette demande de brevet antérieure a été mis en oeuvre en utilisant des cendres issues d'une combustion, à une température de l'ordre de 1100°C-1200°C, de résidus charbonniers, ou plus précisément de terrils. Il s'agit de cendres qui ont été commercialisées sous la marque Béringite® et qui se présentent, lorsque le produit est destiné au traitement des eaux, sous la forme de granulés d'une granulométrie comprise entre 0,5 à 3 mm et, lorsque le produit est destiné au traitement de matières solides, sous la forme d'une poudre, décrite comme fine, alors que la granulométrie est en moyenne la suivante (taille des particules et pourcentage pondéral correspondant):
< 100 µm : 30,2 % 500-1000 µm : 3,1 %
100-200 µm : 27,5 % >1000 µm : 0,2 %
200-500 µm : 38,9 %

La Béringite®, qui agit par adsorption et/ou absorption, a été utilisée à des fins de détoxication de milieux chargés de métaux lourds avec de bons résultats. Toutefois, son procédé de mise en oeuvre, impliquant une percolation, nécessite d'utiliser de grandes quantités de cendres. De plus, on n'a pas envisagé de l'utiliser pour accroître la siccité et/ou la stabilité de boues issues, par exemple, de stations d'épuration d'eaux usées ou issues d'ateliers de traitement de surfaces.

En outre, il n'a pas été proposé d'utiliser la Béringite® pour dépolluer des milieux liquides ou semi-liquides chargés d'hydrocarbures, tels que des eaux de lavage de sols souillés par des hydrocarbures aromatiques polycycliques ou HAP. Jusqu'à présent, ces composés sont éliminés par des procédés physico-chimiques classiques de traitement de l'eau, tels que la floculation et la flottation. L'inconvénient de ces procédés connus est qu'ils mettent en oeuvre des réactifs qui faussent les résultats de mesure des hydrocarbures totaux après traitement, résultats qu'il s'avère nécessaire d'obtenir en vue d'une comparaison avec les normes en vigueur. Par ailleurs, ces procédés ne permettent pas d'éliminer les métaux lourds que peuvent également renfermer les effluents traités.

A la différence de la Béringite, US-A-4 226 630 divulgue un procédé de traitement de boues aqueuses qui, pour éliminer les métaux lourds, utilise des cendres volantes d'origine charbonnière non granulées.

Dans ce brevet, les cendres, issues de la combustion, dans une centrale électrique de charbons sous-bitumeux, sont ajoutées aux boues à hauteur de 10 à 70% en poids par rapport au poids total de boues et de cendres, de manière à former une bouillie durcissant pratiquement instantanément en un corps solide et dense. Ce brevet indique que moins d'environ 34 % des cendres utilisées sont retenues sur un tamis de maille 325 (selon le système américain).

L'addition de cendres volantes à des déchets liquides industriels est aussi connue d'après US-A-4 462 198 en vue de former une combinaison chimique piégeant les contaminants sous la forme d'un produit solide ayant une stabilité structurelle. Les cendres et le liquide sont mélangés en maintenant une teneur en liquide inférieure ou égale à 25% en poids par rapport au poids des cendres. Ce brevet ne donne pas plus d'indication sur la granulométrie exacte des cendres.

Or, il a maintenant été découvert que les cendres volantes peuvent à la fois donner des résultats avantageusement modifiés sur le plan quantitatif et/ou qualitatif en matière de détoxication de milieux liquides, semi-liquides ou solides, et également permettre de porter au taux de siccité exigé par les normes en vigueur, ainsi que de stabiliser, des milieux liquides ou semi-liquides tels que les boues issues de stations d'épuration d'eaux usées et d'ateliers de traitement de surfaces.

Par "milieu semi-liquide" on entend tout milieu liquide contenant une quantité significative de matières en suspension, et qui pourrait aussi bien être désigné par "milieu semi-solide".

L'expression "cendres volantes" se réfère aux cendres qui sont récupérées au cours du dépoussiérage des fumées émises lors de la combustion en chaudière, dans un dépoussiéreur de type électrostatique ou à manches.

Comme cela est bien connu de l'homme du métier, la granulométrie des cendres volantes que l'on peut récupérer à la sortie d'une chaudière dépend du type de chaudière (à lit fluidisé ou à charbon pulvérisé), de charbon ou de résidus charbonniers (plus ou moins calcaires) et de dépoussiéreur que l'on utilise. L'invention consiste à choisir précisément ces paramètres, ainsi que la température de combustion du charbon, qui s'est révélée être critique selon l'invention, de façon à ce que les cendres volantes récupérées aient une granulométrie telle qu'au minimum 80 % en poids passe au tamis ayant une ouverture de maille de 80 µm.

Sans vouloir être lié par une théorie quelconque, on pense que l'action de dessiccation et de stabilisation des cendres sur les boues résiduaires est due à la présence importante d'oxyde de calcium dans leur composition, telle qu'elle ressort, par exemple, de l'Exemple 1 ci-après. Dans la pratique, on a constaté que les cendres permettent d'atteindre les valeurs de taux de siccité préconisées par la réglementation, et même des valeurs plus élevées qui procurent des avantages supplémentaires aux utilisateurs de ces cendres. En effet, par suite de la dessiccation plus poussée, la quantité volumique de matière à transporter et à soumettre au traitement ultérieur de stabilisation se trouve grandement réduite, ce qui résulte en une économie correspondante. Les normes relatives à la solidité mécanique du mélange de boues et de cendres sont également respectées. De plus, la lixiviation de la partie solide constituée par les cendres chargées de polluants est très inférieure aux normes. Enfin, dans la plupart des cas, on a également constaté que ces cendres permettaient de réduire, voire d'éliminer, les mauvaises odeurs associées à ces boues.
Le procédé de traitement selon l'invention est applicable aux milieux liquides, semi-liquides ou solides et il utilise des cendres volantes d'origine charbonnière, issues d'une combustion, dans une chaudière à lit fluidisé circulant, à une température de l'ordre de 850°C, lesquelles cendres ont une granulométrie telle qu'au minimum 80% en poids passe au tamis ayant une ouverture de maille de 80 µm.

Le procédé selon l'invention peut être appliqué à la dépollution de milieux liquides ou semi-liquides pollués par des hydrocarbures, à la détoxication de milieux liquides, semi-liquides ou solides, tels que des sols, chargés de métaux lourds, et à la déshydratation et/ou stabilisation de boues, sans que ces applications soient limitatives.

Lorsque le procédé selon l'invention est appliqué à la détoxication ou à la dépollution de milieux liquides ou semi-liquides ou à la déshydratation et/ou la stabilisation de milieux semi-liquides, le traitement est mis en oeuvre avec une quantité de cendres comprise entre entre 0,2 et 2%, en assurant un contact intime entre le milieu à traiter et les cendres (par exemple par brassage en cuve). Avantageusement, le milieu à traiter et les cendres sont mis en contact pendant une durée de l'ordre de 10 minutes à une heure, une durée de l'ordre d'une demi-heure étant en général appropriée à donner des résultats optimaux. En pratique, le temps de contact et la quantité utile de cendres seront avantageusement calculés, au préalable, par analyses et essais en laboratoire sur des échantillons du milieu à traiter.

Lorsqu'il s'agit de détoxiquer des terres polluées, notamment par des métaux lourds, on mélange, auxdites terres, par malaxage profond, un pourcentage de cendres correspondant aux quantités de métaux lourds présents dans ces terres. Pour ce faire, on peut soit procéder à l'enlèvement de la totalité des terres souillées, dans le cas où elles sont destinées à être mises en décharge après traitement, soit pratiquer une excavation sur le site à dépolluer -après avoir déterminé préalablement, par carottage, l'étendue de l'excavation à pratiquer-, si les terres dépolluées doivent être remises en place. Dans les deux cas, il ne se produira pas de lixiviation.

L'invention vise également des installations pour le traitement en continu ou séquentiel, à l'aide des cendres selon l'invention, d'un milieu liquide ou semi-liquide qui est éventuellement chargé de métaux lourds et/ou d'hydrocarbures.

Dans une première forme d'exécution qui vise une installation fixe, ladite installation comprend des moyens à débit réglable assurant l'alimentation en cendres, des moyens à débit réglable assurant l'alimentation en milieu liquide ou semi-liquide à traiter, lesdits moyens d'alimentation alimentant une cuve de brassage adaptée à alimenter un décanteur, pourvu d'une évacuation du liquide du milieu traité et d'une évacuation séparée des cendres sur lesquelles se sont, le cas échéant, fixés les métaux lourds et/ou les hydrocarbures que le milieu traité contenait éventuellement, lesdites cendres étant mélangées aux matières solides que contenait en suspension ledit milieu, des moyens de recirculation en circuit fermé étant prévus pour maintenir une circulation ininterrompue dans la cuve de brassage, lorsque l'installation est en état de veille.

Dans une première variante, le décanteur est une cuve de décantation, pourvue, en partie haute, d'une évacuation du surnageant de décantation formé du liquide que contenait le milieu traité et, en partie basse, d'une évacuation des cendres chargées de polluants et de matières en suspension.

Dans une seconde variante plus sophistiquée et facilitant une automatisation totale du procédé, le décanteur est un décanteur centrifuge. Ce type d'appareil est bien connu sur le marché pour la séparation solide-liquide. Dans le cas où le milieu traité est constitué de boues résiduaires, l'utilisation d'un tel décanteur centrifuge est préférée dans la mesure où elle permet d'obtenir un taux de siccité des boues plus élevé, c'est-à-dire de l'ordre de 60%, qu'avec un décanteur par gravité.

Il est bien entendu toutefois que d'autres types de moyens de séparation solide-liquide pourraient également être utilisés.

Dans une deuxième forme d'exécution, l'invention vise une installation mobile pour le traitement, à l'aide des cendres selon l'invention, d'un milieu liquide ou semi-liquide, avantageusement de boues résiduaires. Cette installation comprend, en combinaison :
des moyens de stockage de cendres, tel qu'un silo, et d'alimentation en cendres et des moyens d'alimentation en milieu liquide ou semi-liquide à traiter,
un malaxeur adapté à être alimenté par lesdits moyens d'alimentation,
un décanteur centrifuge adapté à être alimenté par ledit malaxeur et pourvu d'une évacuation du liquide du milieu traité et d'une évacuation séparée des cendres sur lesquelles se sont, le cas échéant, fixés les métaux lourds et les hydrocarbures que le milieu traité contenait éventuellement, lesdites cendres étant mélangées aux matières solides que contenait en suspension ledit milieu,
des moyens de commande automatique des opérations d'alimentation, de malaxage, de centrifugation et d'évacuation précitées, et
un groupe électrogène adapté à alimenter en énergie ladite installation.

Avantageusement, l'installation mobile précitée comprendra également des moyens intégrés pour l'analyse des cendres et du liquide sortant du décanteur centrifuge. En outre, ladite installation pourra également comprendre un dispositif de moulage de blocs de cendres alimenté par l'évacuation des cendres du décanteur centrifuge, de façon à faciliter la manutention et le transport ultérieurs des cendres évacuées.

Lorsqu'elle est utilisée dans le traitement de boues résiduaires, cette installation mobile présente l'avantage de pouvoir traiter des quantités de boues relativement faibles, telles que celles issues des ateliers de traitement de surfaces, qui ne justifieraient pas la construction d'une installation fixe. Une même installation mobile peut donc traiter les boues de plusieurs ateliers de traitement de surface sur demande de leur exploitant respectif. Dans d'autres applications, par exemple dans le traitement des eaux de lavage de terres souillées par des hydrocarbures, la mobilité de l'installation lui permet, de même, d'être déplacée d'un site de traitement à l'autre.

Les exemples ci-après sont donnés à titre indicatif pour mettre en évidence les propriétés des cendres selon l'invention et, en particulier, les différences quantitatives et qualitatives entre les résultats de détoxication obtenus, sur des milieux chargés de métaux lourds, avec les cendres selon l'invention et la Béringite.

### Exemple 1 (mode opératoire général)

On a brûlé des charbons des mines de Provence (France), c'est-à-dire des charbons assez pauvres, dans une chaudière à lit fluidisé circulant, fonctionnant à une température moyenne de l'ordre de 830-850°C.

Les cendres obtenues ont une granulométrie moyenne telle qu'indiquée plus haut, c'est-à-dire que la plupart des particules a une taille inférieure à 80 µm.

Les cendres obtenues selon cet exemple ont une teneur en SiO₂ de 22,00 %, une teneur en Al₂O₃ de 9,35 %, une teneur en CaO de 36,50%, une teneur en Fe₂O₃ de 6,90 % et une teneur en MgO de 1,85 %. Elles renferment également 9,80 % de chaux libre. Ces teneurs sont représentatives de valeurs moyennes.

Ces cendres sont transportées telles quelles vers le site de détoxication, le procédé appliqué étant décrit ci-après par référence aux dessins annexés dans lesquels :
- la figure 1 illustre une première forme d'exécution de l'installation selon l'invention, dans une première variante,
- la figure 2 illustre une deuxième variante de la première forme d'exécution de l'installation selon l'invention, et
- la figure 3 illustre une deuxième forme d'exécution de l'installation selon l'invention.

Dans le cadre de la description des figures, on se référera, à titre d'exemple, à l'application des cendres selon l'invention à la détoxication de milieux liquides ou semi-liquides chargés de métaux lourds. Il doit cependant être bien clair que les installation décrites peuvent en variante, ou en outre, être utilisées pour traiter des milieux contenant d'autres polluants, tels que des hydrocarbures, et pour déshydrater et/ou stabiliser des boues résiduaires.

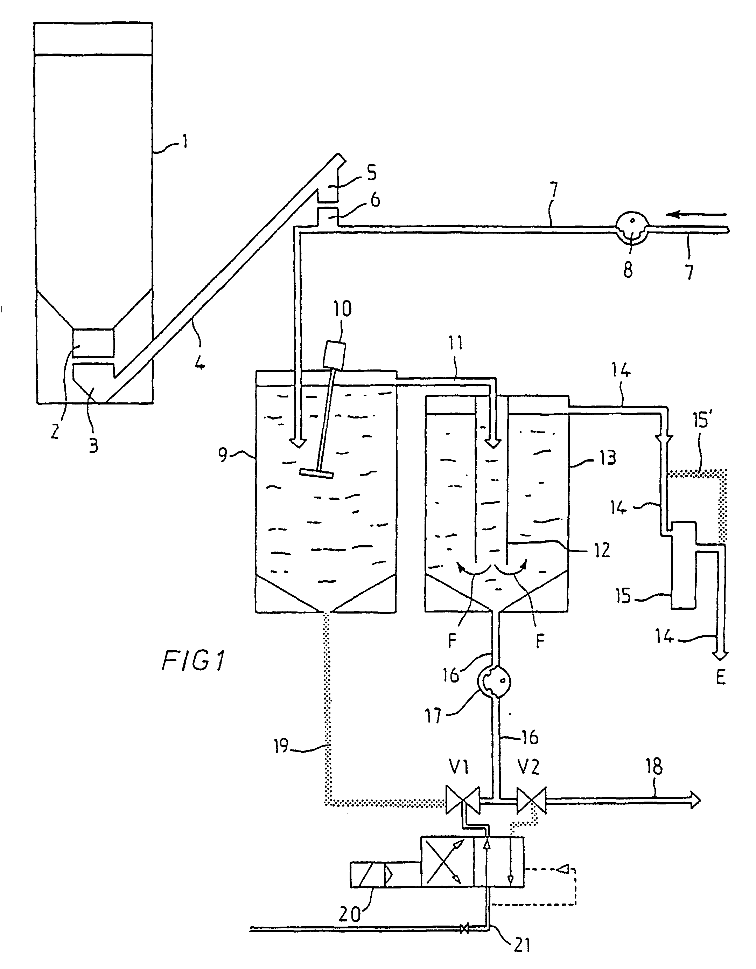

L'installation illustrée schématiquement à la figure 1 comporte un silo 1 qui débouche, en partie basse, dans une écluse rotative 2 se déversant dans l'extrémité inférieure 3 d'une vis d'alimentation 4. Le silo 1 est muni de vibreurs séquentiels et de sondes de niveaux non représentés. L'extrémité supérieure 5 de la vis d'alimentation 4 alimente un injecteur de cendres 6 qui débouche dans une conduite 7 d'alimentation en milieu liquide ou semi-liquide à traiter. Sur la conduite 7 est interposée une pompe 8, en amont de l'injecteur 6. En aval de l'injecteur 6, la conduite 7 plonge dans une cuve de brassage 9 munie d'un agitateur 10. La cuve 9 comporte, en partie supérieure, un trop-plein qui se déverse selon 11 dans la partie centrale, délimitée par une cloison cylindrique 12, d'une cuve de décantation 13. La cloison 12, qui joue le rôle de paroi siphoïde, se termine à une certaine distance du fond de la cuve 13 qui, lui, n'est donc pas cloisonné.

Le volume des deux cuves 9 et 13 est calculé pour que (1) le contact entre cendres et milieu liquide ou semi-liquide à traiter dans la cuve 9 et (2) la décantation dans la cuve 13 durent le temps voulu, temps qui est en moyenne de l'ordre de 1/2 heure.

La cuve 13 comporte :
- en partie supérieure, un trop-plein qui se déverse dans une conduite 14 conduisant le liquide du milieu traité à l'égout E ou à un recyclage, un filtre à poche 15 étant interposé sur la conduite 14, et
- en partie inférieure, une conduite 16 d'évacuation de cendres en suspension dans une fraction du milieu liquide ou semi-liquide.

Un by-pass 15' évite le filtre 15 s'il venait, en se colmatant, à être d'un débit insuffisant.

La conduite 16, sur laquelle est interposée une pompe 17, débouche dans une conduite de rejet 18.

L'installation de la figure 1 comporte en outre des équipements permettant de la faire tourner sans arrêt à l'état de veille. Il s'agit, d'une part, d'une paire de vannes V1 et V2 interposées, la première V1, sur une conduite 19 reliant la conduite 16 d'évacuation des cendres au bas de la cuve de brassage 9, et la deuxième V2 interposée entre ladite conduite 16 et la conduite 18 de rejet et, d'autre part, d'un motovariateur (non représenté) agissant sur la pompe 17 pour en faire varier le débit selon l'état d'extraction (vitesse élevée) ou de veille (faible vitesse).

Les vannes V1 et V2 sont commandées par un ensemble électro-pneumatique 20 alimenté en air comprimé selon 21. Cette commande est exercée selon le schéma suivant :
- en état de marche (écluse rotative 2, vis d'alimentation 4 et pompe 8 activées ; pompe 17 fonctionnant à vitesse élevée) : vanne V1 fermée, vanne V2 ouverte ;
- en état de veille (écluse rotative 2, vis d'alimentation 4 et pompe 8 désactivées ; pompe 17 fonctionnant à faible vitesse) : vanne V1 ouverte, vanne V2 fermée. Lorsque l'on utilise l'installation de la figure 1, le procédé de traitement est mis en oeuvre comme suit :
   Les cendres telles qu'issues de la combustion sont chargées dans le silo 1 et déversées via l'écluse rotative 2 dans la trémie que forme l'extrémité inférieure 3 de la vis d'alimentation 4. Le débit des cendres distribuées est réglé, en fonction de la nature et des quantités de métaux lourds présents dans l'effluent à traiter, au moyen d'un variateur de vitesse (non représenté) qui équipe l'écluse rotative 2. Les cendres sont ainsi hissées jusqu'à l'extrémité supérieure 5 de la vis 4 et déversées dans l'injecteur 6. D'un autre côté, le milieu à traiter, par exemple un effluent chargé de métaux lourds, est pompé par la pompe 8 le long de la conduite 7, dans laquelle débouche l'injecteur de cendres 6. Le débit de la pompe 8 est réglé selon les besoins par un moto-variateur de vitesse non représenté. Les cendres et l'effluent entrent en contact dans la conduite 7 au niveau de l'injecteur 6 et l'ensemble s'écoule dans la cuve 9 où il est brassé par l'agitateur 10 pendant environ 1/2 heure. On notera toutefois que, au lieu de venir en contact mutuel en amont de la cuve de brassage, les cendres et l'effluent pourraient être introduits séparément dans ladite cuve. La cuve, dans cet exemple, a un volume de 5 m³, la durée précitée de 1/2 heure et ce volume précité de 5 m³ correspondant à un débit de la pompe 8 de 5 m³/h. Au fur et à mesure que le mélange cendres/effluent se déverse dans la cuve 9, une quantité correspondante de mélange s'échappe, selon 11, par le trop-plein de la cuve 9, pour être reçue dans la partie centrale, délimitée par la cloison 12, de la cuve de décantation 13 qui a également un volume de 5 m³ et dans laquelle la suspension cendres/effluent décante pendant une heure. Au fur et à mesure que la suspension brassée cendres/effluent se déverse dans la cuve 13, une quantité correspondante du surnageant de décantation s'échappe, selon les flèches F, en direction de la partie supérieure de la cuve 13 tandis que les cendres décantées sont extraites par la pompe 17 via la conduite 16. Au fur et à mesure que le surnageant s'élève dans la partie périphérique de la cuve 11, la décantation se parachève et, lorsqu'il atteint le trop-plein de la cuve 13, le surnageant n'est formé sensiblement que d'effluent détoxiqué, c'est-à-dire contenant une quantité de métaux lourds bien inférieure aux seuils admissibles selon les normes internationales en vigueur. Ce dernier est évacué par la conduite 14, le filtre 15 interposé retenant les poussières qui sont insensibles à la décantation. La conduite 14 est raccordée à l'égout E ou à une installation de recyclage.

De leur côté, les cendres chargées de polluants sont envoyées, selon 18, vers une unité de déshydratation. Le matériau sec résultant peut par exemple être utilisé en cimenterie.

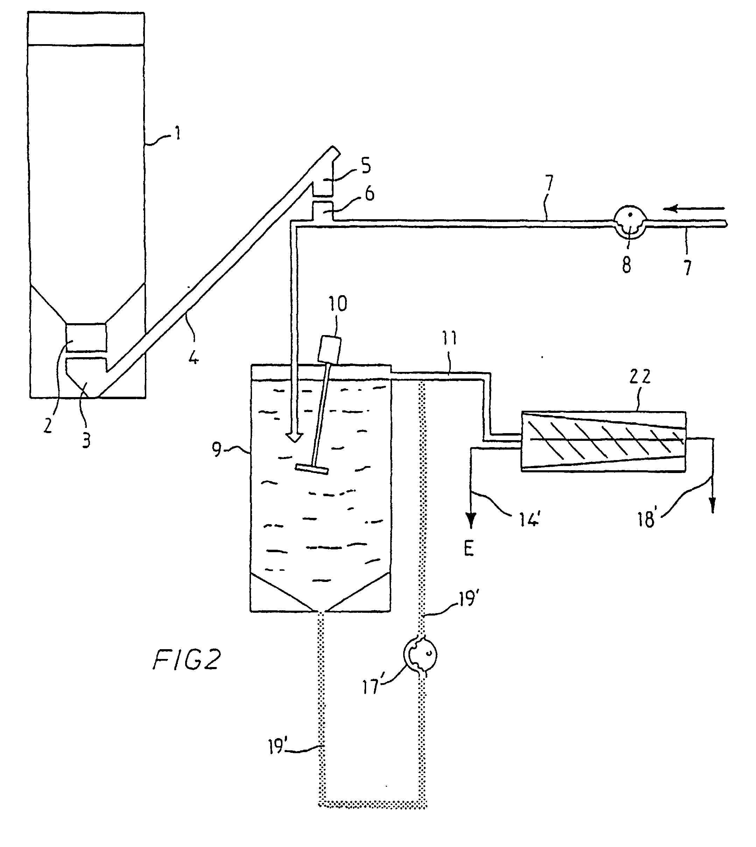

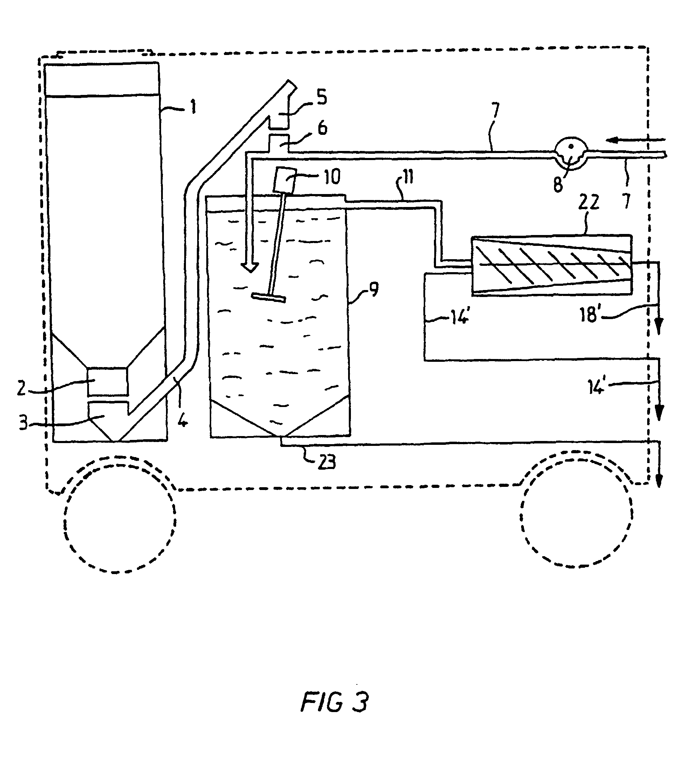

Les composants des installations des figures 2 et 3 communs à ceux de l'installation de la figure 1 sont désignés par les mêmes références et ils ne seront pas décrits de nouveau, pas plus que leur fonctionnement. Les composants des installations des figures 2 et 3 qui sont similaires à des composants de l'installation de la figure 1 sont désignés par les mêmes références, mais suivies du signe prime.

L'installation de la figure 2 se distingue de celle de la figure 1 par le fait qu'elle est considérablement simplifiée grâce à l'utilisation d'un décanteur centrifuge, représenté de façon très schématique en 22, au lieu d'une cuve de décantation fonctionnant par gravité.

Plus précisément, le décanteur centrifuge 22 se compose d'un bol cylindrique conique dans lequel est logée une vis convoyeuse coaxiale. Ce type de décanteur centrifuge fonctionne par vitesse différentielle entre le bol et la vis et évacue séparément, selon 18', les cendres chargées de métaux lourds et mélangées avec les matières solides que contenait l'effluent à traiter et, selon 14', l'effluent débarrassé desdits métaux lourds. Une conduite 19' forme by-pass entre la conduite 11, en amont du décanteur centrifuge 22, et la partie basse de la cuve de brassage 9. Une pompe 17' est interposée sur ladite conduite 19'. En état d'extraction, la pompe 17' est inactive. En état de veille, elle assure la circulation continue du mélange de cendres et d'effluents dans la cuve de brassage.

L'installation de la figure 3 se distingue, quant à elle, de celle de la figure 2 par le fait qu'elle est prévue pour être montée sur une remorque. De ce fait, le silo 1 et la trémie 3 associée à celui-ci sont abaissés d'une distance telle, par rapport à la figure 2, que le fond du silo 1 et le fond du malaxeur 9 se trouvent sensiblement au même niveau, sur la remorque (très schématisée en pointillés). De plus, cette installation ne comporte pas de conduite de by-pass 19' (figure 2) entre la conduite 11, en amont du décanteur centrifuge 22, et le malaxeur 9. Au lieu de cela, la partie basse du malaxeur 9 présente une évacuation 23 permettant de le vidanger. L'installation comprend en outre des moyens de commande automatique des opérations d'alimentation, de malaxage, de centrifugation et d'évacuation, ainsi qu'un groupe électrogène adapté à alimenter en énergie ladite installation, lesquels moyens de commande et groupe électrogène n'ont pas été représentés pour ne pas surcharger la figure.

### Exemple 2 : détermination de l'effet de la durée du contact entre les cendres et le milieu traité.

On a traité trois solutions (I, II et III) dont la teneur en éléments métalliques est indiquée dans le Tableau I et qui ont été maintenues en contact avec les cendres selon l'invention pendant 15, 30, 45, 60, 90 et 120 minutes.

Comme il ressort de ce Tableau, la teneur en éléments métalliques du milieu, après traitement :
- atteint sa valeur minimum après 30 mn pour ce qui est du Cd, du Cu et du Fe (solution I) et du Pb (solution II),
- offre le plus fort gradient de réduction en 30 mn pour ce qui est du Cr (solution I),
- décroît rapidement en 15 mn puis progressivement au-delà pour ce qui est du Pb (solution I) et du Zn (solutions I et II).

Compte tenu des résultats observés, un temps de traitement de 30 mn sera généralement optimal.

Comme il ressort également du Tableau I, on observe une élévation rapide du pH du milieu qui passe d'une valeur nettement acide au départ à une valeur nettement basique en 15 minutes et s'y maintient.

### Exemple 3 : Détermination de l'effet de la quantité de cendres utilisée.

On a traité un effluent, dont la teneur en éléments métalliques est indiquée dans le Tableau II, avec les cendres selon l'invention, qui ont été respectivement ajoutées à l'effluent à hauteur de 0,2% et 2% en volume, les cendres et l'effluent ayant été maintenus en contact mutuel pendant environ 30 minutes.

Comme il ressort de ce tableau, la teneur en éléments métalliques du milieu, après traitement, est sensiblement la même dans les deux cas, c'est-à-dire bien inférieure aux normes en vigueur.

On notera également que le pH initial, trop acide, du milieu, a été ajusté à 5,4 avant traitement, de façon à permettre la précipitation du cuivre sous forme d'hydroxyde.

### Exemple 4 : Comparaison quantitative et qualitative de la détoxication d'un bain chromique par les cendres selon l'invention et les cendres selon l'art antérieur comme témoins.

On a traité pendant 30 minutes un bain chromique, dont la teneur en métaux est indiquée dans le Tableau III ci-après, avec 2% en volume de cendres selon l'invention, en utilisant l'installation décrite précédemment. Le même bain a par ailleurs été traité avec les cendres de l'art antérieur, en mettant en oeuvre un procédé de percolation utilisant au moins 10% en volume de cendres.

Comme il ressort à l'évidence de ce Tableau, l'efficacité des cendres selon l'invention s'exerce sur tous les éléments et elle est quantitativement supérieure à celle des cendres témoins vis-à-vis de chacun d'eux, lesdites cendres témoins n'ayant que peu ou pas d'effet sur la teneur en As, en Cr total et en Ni du bain chromique de départ, et augmentant même sa teneur en Cd et en Zn, et éventuellement en Cr total.

### Exemple 5 : Comparaison quantitative et qualitative de la détoxication d'un bain cyanuré par les cendres selon l'invention et les cendres selon l'art antérieur comme témoins.

On a traité un bain cyanuré, dont la teneur en métaux est indiquée dans le Tableau IV ci-après, respectivement avec les cendres selon l'invention et les cendres témoins, comme décrit dans l'Exemple 4. Comme il ressort à l'évidence de ce Tableau, l'efficacité des cendres selon l'invention s'exerce sur tous les éléments et elle est quantitativement supérieure à celle des cendres témoins vis-à-vis de chacun d'eux, sauf dans le cas du Fe où elle est du même ordre.

### Exemple 6 : Traitement d'effluents pollués par dès HAP

Parallèlement à l'étude de détoxication précédemment décrite, on a évalué l'efficacité des cendres selon l'invention dans la détoxication d'effluents aqueux issus du lavage de terres souillées par des hydrocarbures aromatiques polycycliques. La quantité de cendres utilisées représentait environ 5% du volume de l'effluent à traiter et le temps de contact entre les cendres et l'effluent était d'environ 30 minutes. Les résultats obtenus sont rassemblés dans le Tableau V ci-après. Comme l'indique ce tableau, les cendres selon l'invention permettent d'obtenir un taux de dépollution global de 96,4%. La teneur totale en hydrocarbures, après traitement, est de 10,4 µg/kg, soit de 1,04 mg/l, ce qui est bien inférieur aux normes en vigueur qui limitent le rejet en hydrocarbures à 5 mg/l. Une fois traité, l'effluent peut donc être rejeté ou, si on le souhaite, recyclé (par exemple, réutilisé dans le cadre d'un nouveau lavage de terres).

### Exemple 7 : Essai de lixiviation.

On a effectué un essai de lixiviation, selon la norme X31-210, sur des cendres selon l'invention ayant servi au traitement d'un effluent chromé issu d'une installation de galvanoplastie.

Les résultats de cet essai sont rassemblés dans le Tableau VI. Comme il ressort de ce tableau, les teneurs en éléments métalliques lixiviés sont toutes très inférieures aux normes.

### Exemple 8 : Traitement de boues de station d'épuration.

On a réalisé un essai de stabilisation sur des boues issues de la station d'épuration des eaux de Millau, Aveyron (France), auxquelles on a ajouté séparément trois types de cendres selon l'invention, identifiées respectivement par les références 1, 2 et 3, qui renferment des teneurs en CaO croissantes et ont une granulométrie décroissante. Chaque type de cendres a été ajouté à hauteur, respectivement, de 1 et 2% en volume. Le temps de contact entre les cendres et les boues était d'environ 30 minutes.

Les résultats de cet essai sont donnés dans le Tableau VII ci-après.

Comme il ressort de ce tableau, l'adjonction de cendres selon l'invention aux boues permet d'atteindre, dans tous les cas, un taux de siccité, calculé selon la norme X31-102, supérieur à 60% et pouvant même aller jusqu'à 70%, soit bien supérieur aux normes en vigueur qui préconisent un taux de siccité d'au moins 35%. On notera que les résultats obtenus dépendent davantage de la teneur en CaO et/ou de la granulométrie des cendres utilisées que de la quantité de cendres mise en oeuvre.

La partie solide ainsi stabilisée peut être stockée. Des essais de lixiviation, ainsi que des analyses des eaux surnageantes, ont donné des résultats analogues à ceux obtenus dans les exemples précédents, c'est-à-dire des valeurs bien inférieures aux normes.

Il ressort des exemples qui précédent que les cendres selon l'invention constituent un moyen de détoxication ou de dépollution plus performant que les cendres de l'art antérieur. Là encore, sans vouloir être lié par une théorie quelconque, on pense que les particules des cendres selon l'invention ont une structure physico-chimique différente des cendres antérieurement utilisées dans des applications de détoxication du fait qu'elles ont une granulométrie beaucoup plus fine.

Les cendres selon l'invention peuvent être utilisées non seulement pour débarrasser de leurs métaux lourds et de leurs hydrocarbures des milieux liquides et semi-liquides, en fixant à demeure ces polluants, comme décrit dans les exemples, mais également pour dépolluer des milieux solides contenant des métaux lourds. Compte tenu de l'absence de lixiviation, on peut utiliser les cendres selon l'invention pour bloquer ces polluants et ainsi leur interdire, par exemple, d'empêcher le développement de processus biologiques, tels que la croissance des végétaux.

De plus, comme on l'a vu plus haut, les cendres selon l'invention peuvent en variante, ou en outre, être utilisées pour déshydrater et/ou stabiliser des boues résiduaires, telles que les boues provenant des installations de traitement de surfaces ou des stations d'épuration.

Enfin, étant directement applicables, c'est-à-dire sans agglomération préalable en granulés, les cendres selon l'invention sont d'une utilisation plus économique que celles de l'art antérieur.

Il est bien entendu que l'invention n'est pas limitée aux modes de mise en oeuvre du procédé et formes d'exécution de l'installation qui ont été décrits.

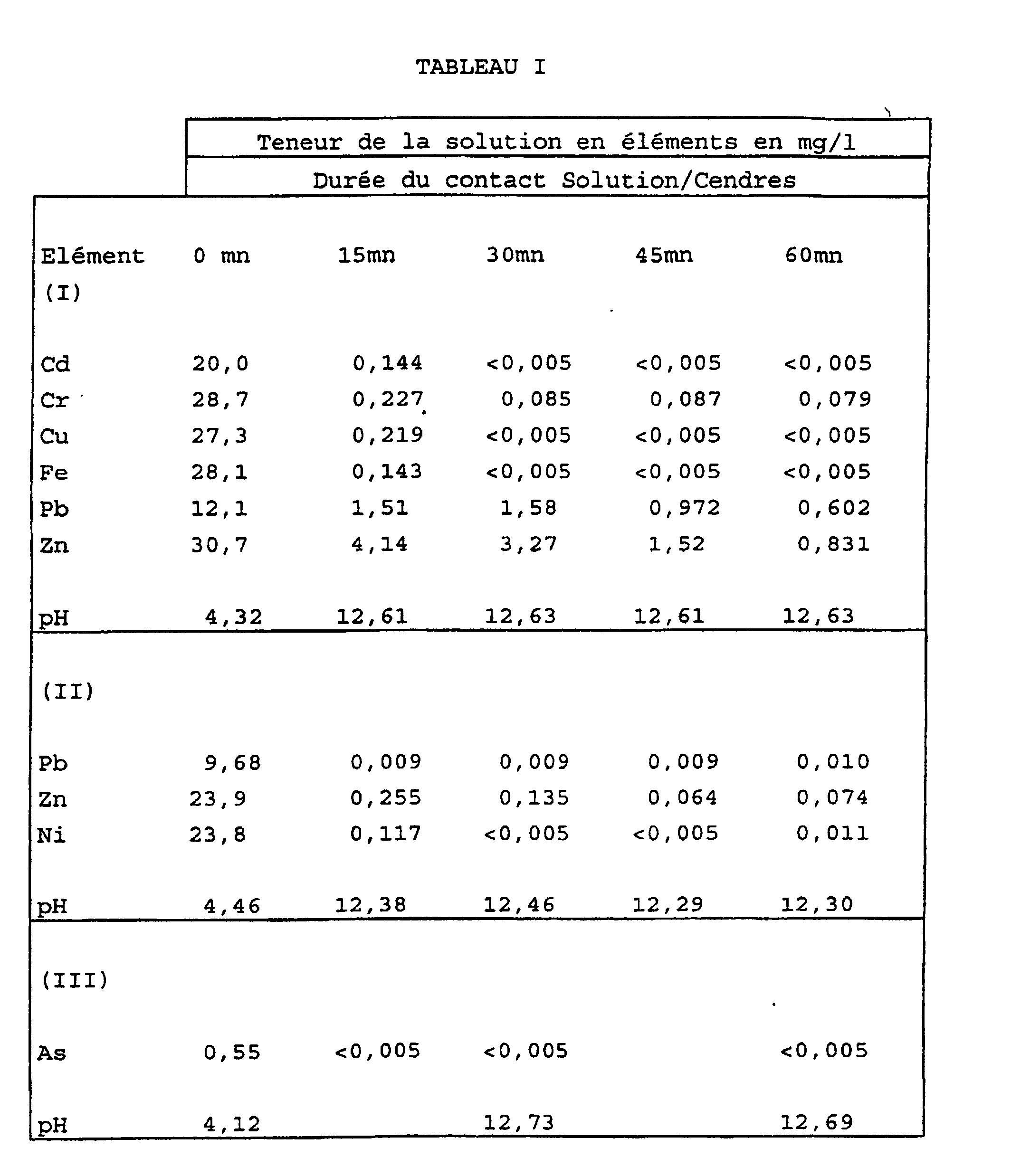

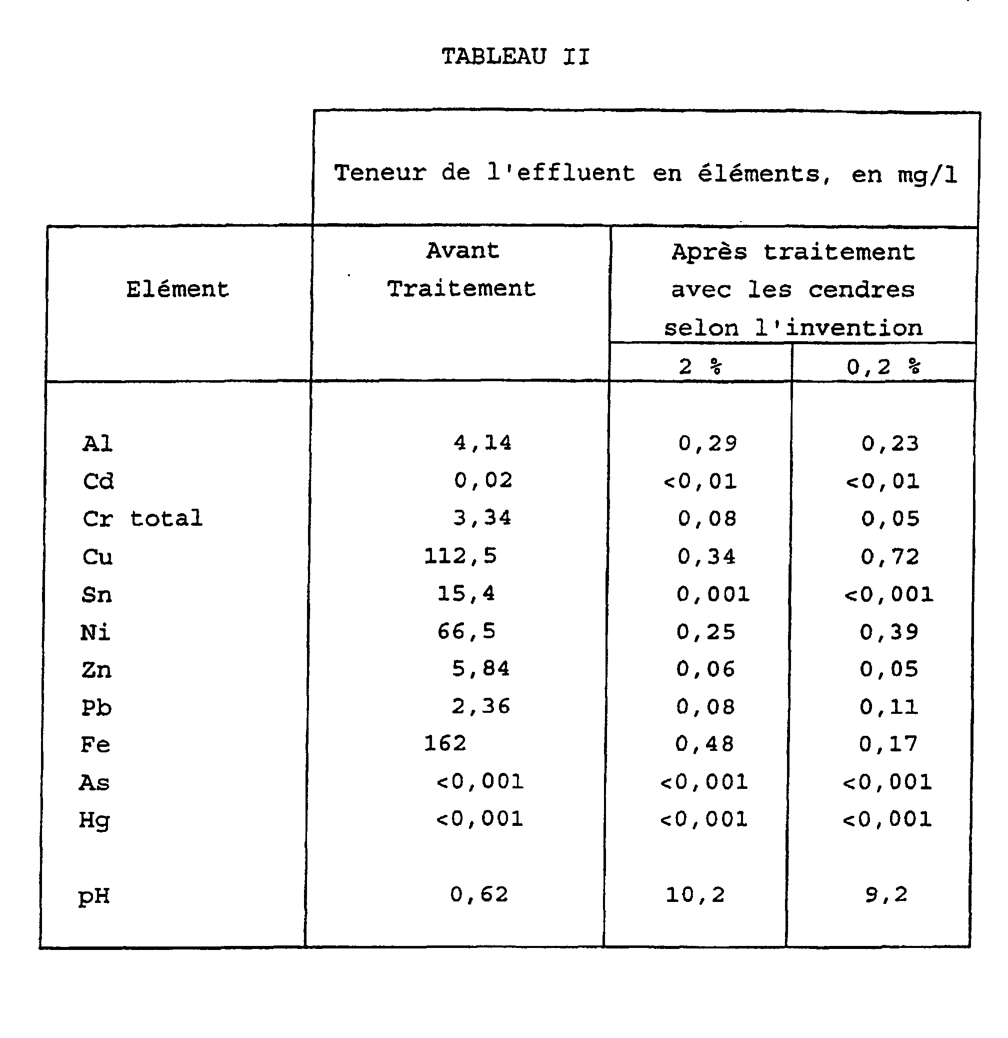

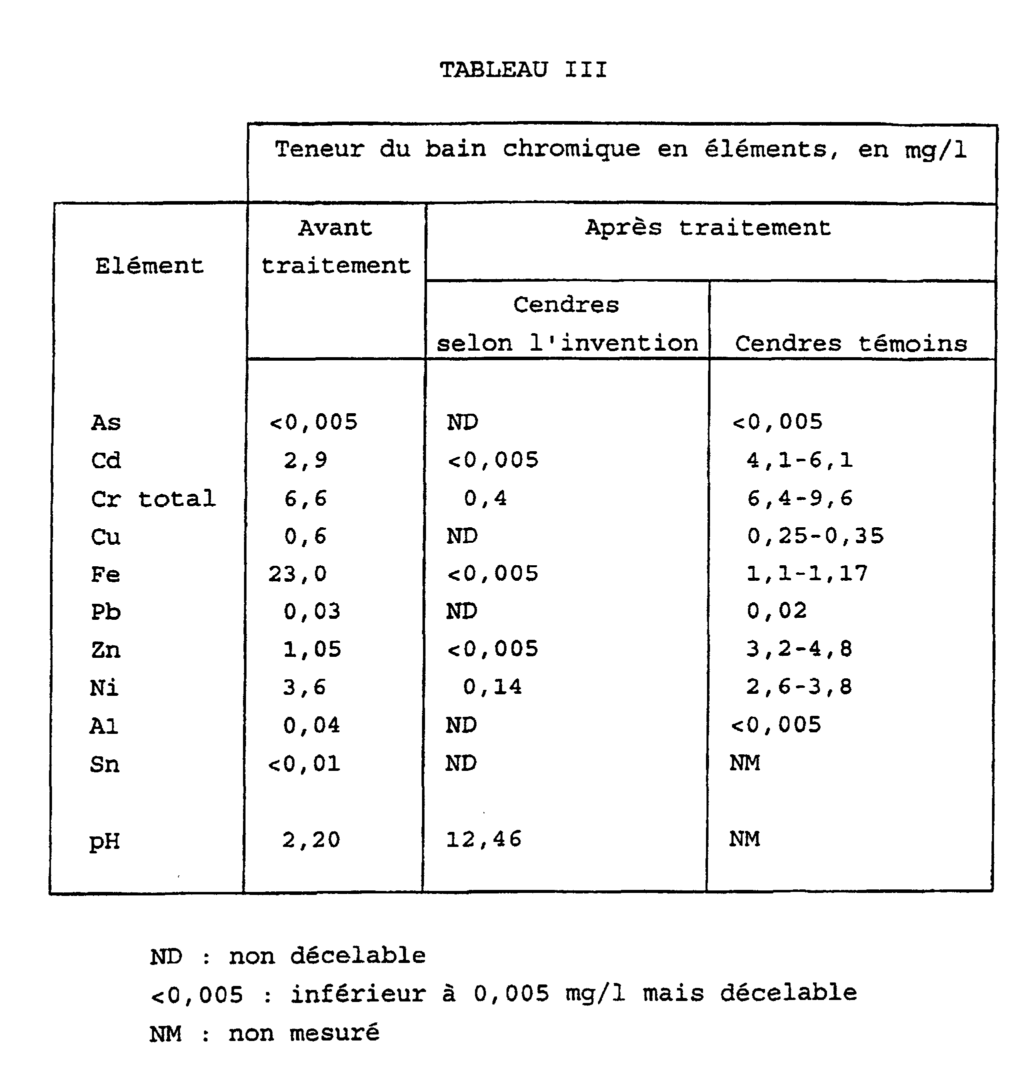

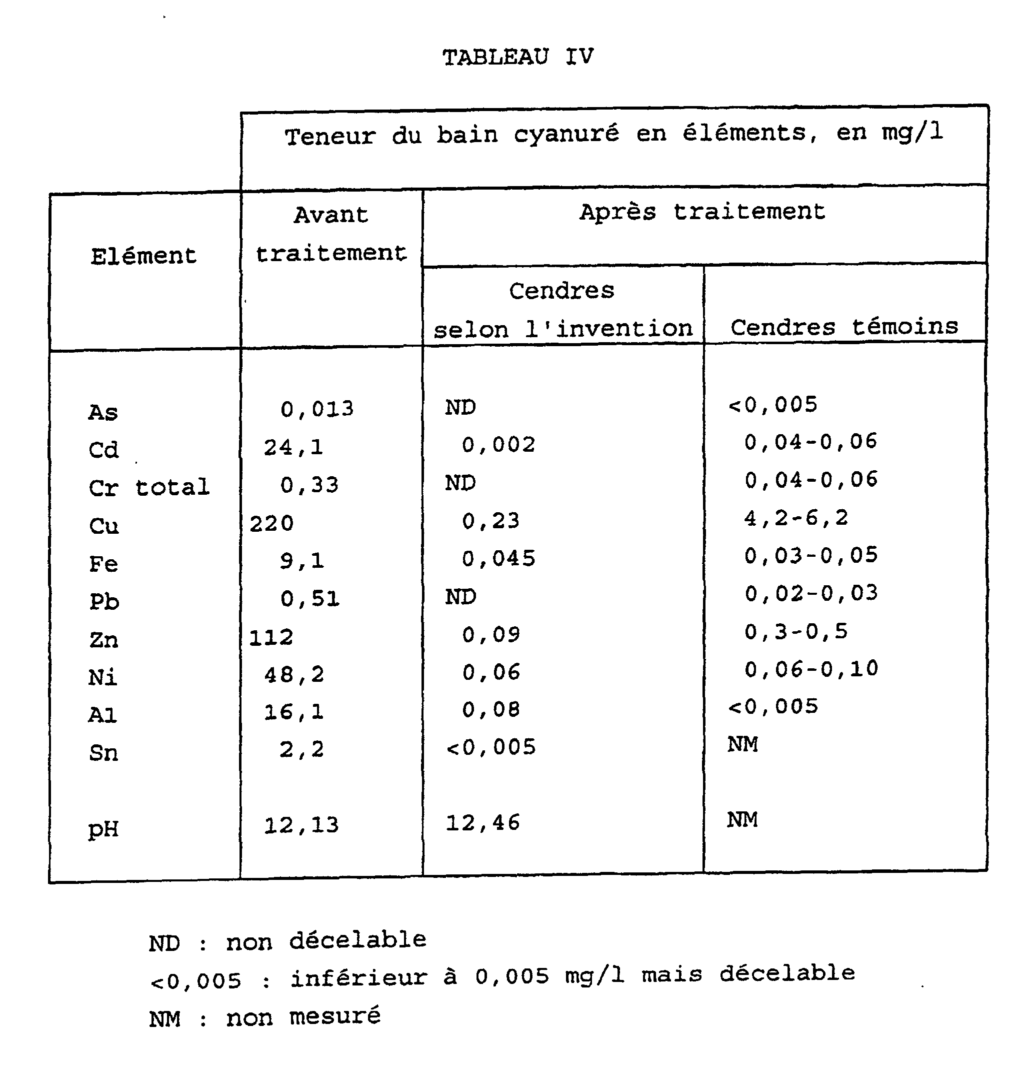

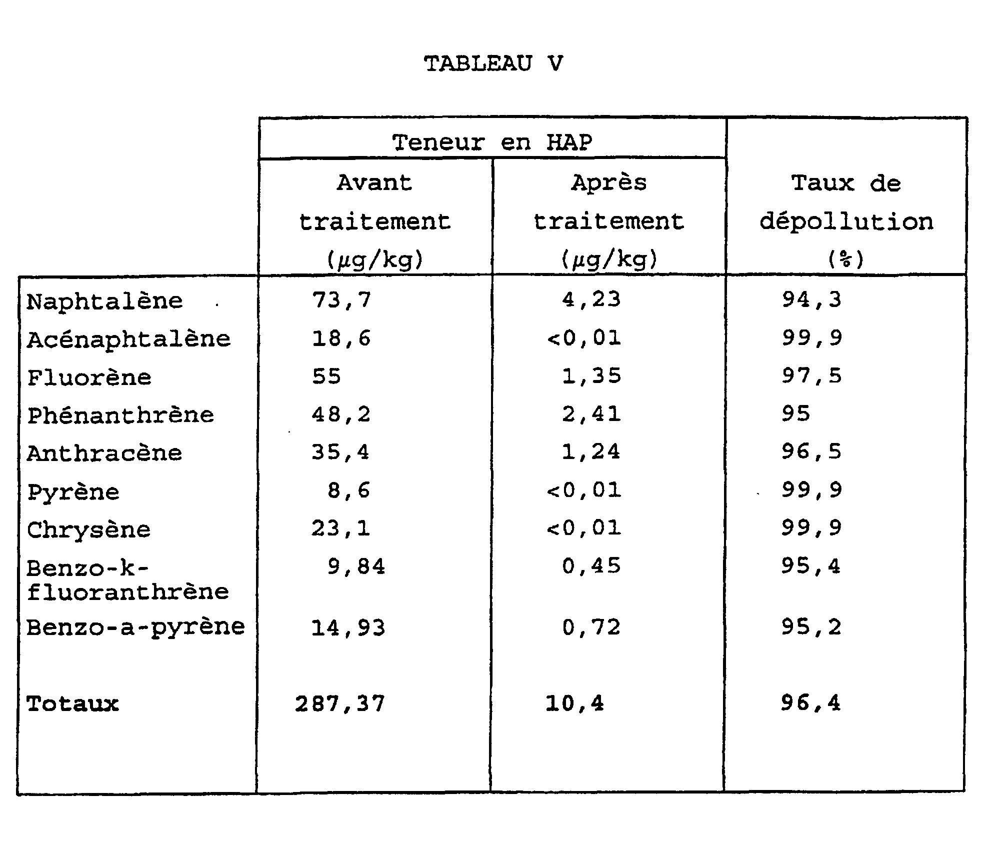

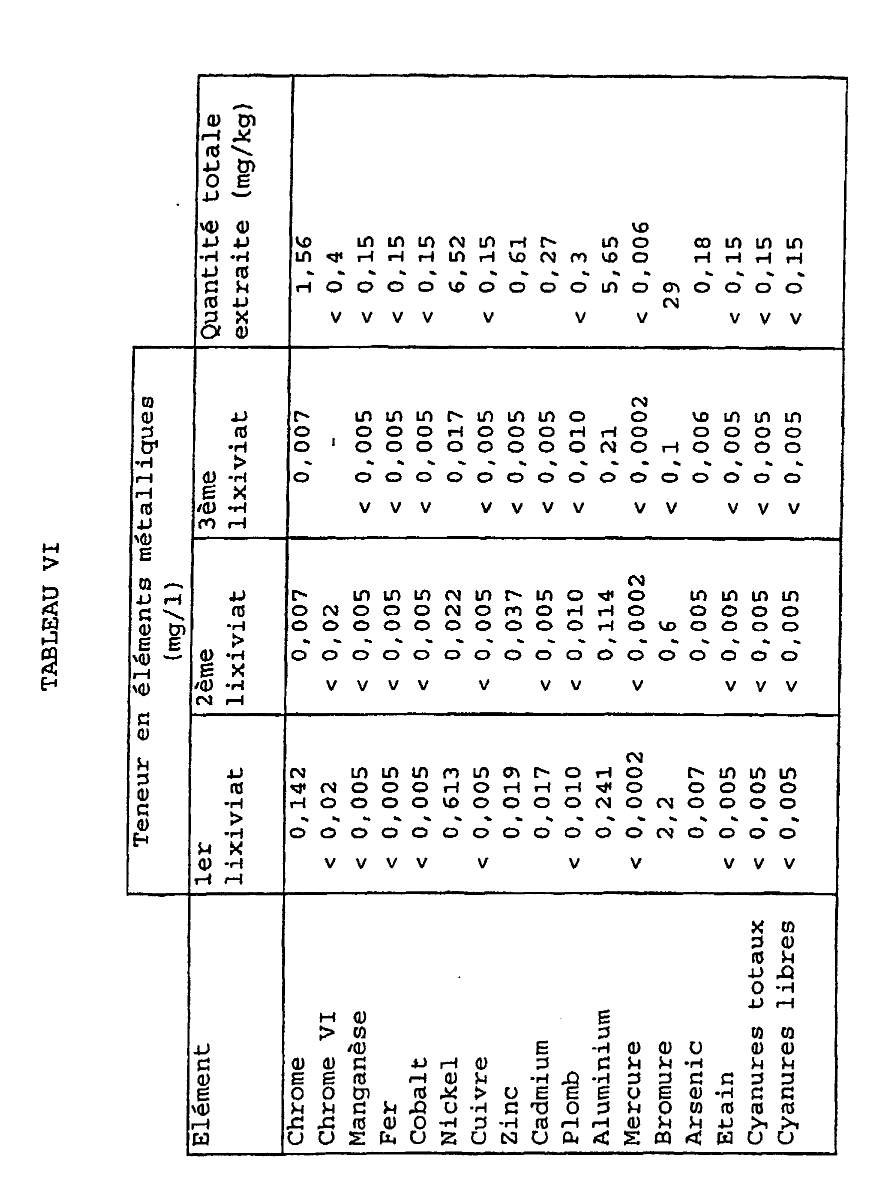

**TABLEAU VII**

| Cendres utilisées | | Taux de siccité (%) |
|---|---|---|
| Type | Quantité (% vol.) | |
| 1 | 2 % | 60,5 |
| | 1 % | 64,5 |
| 2 | 2 % | 64,5 |
| | 1 % | 65,6 |
| 3 | 2 % | 70,8 |
| | 1 % | 70,0 |

## Revendications

1. Procédé de traitement de milieux liquides ou semi-liquides, par mise en contact du milieu à traiter avec des cendres volantes d'origine charbonnière, issues d'une combustion, dans une chaudière à lit fluidisé circulant, à une température de l'ordre de 850°C, lesquelles cendres ont une granulométrie telle qu'au minimum 80% en poids passe au tamis ayant une ouverture de maille de 80 µm, **caractérisé en ce qu'**il consiste à utiliser de 0,2 à 2% en volume de cendres par rapport au volume du milieu à traiter.

2. Procédé selon la revendication 1, **caractérisé en ce qu'**il consiste, après traitement du milieu avec lesdites cendres, à soumettre le milieu traité à une centrifugation pour récupérer séparément le liquide du milieu traité et les cendres, sur lesquelles se sont, le cas échéant, fixés les métaux lourds et/ou les hydrocarbures, en particulier les hydrocarbures aromatiques polycycliques, que le milieu traité contenait éventuellement, lesdites cendres étant mélangées aux matières solides que contenait en suspension ledit milieu.

3. Procédé selon la revendication 2, **caractérisé en ce qu'**il consiste à mettre en contact le milieu à traiter et les cendres pendant une durée comprise entre 10 minutes et une heure.

4. Procédé selon la revendication 3, **caractérisé en ce qu'**il consiste à mettre en contact le milieu à traiter et les cendres pendant une durée de l'ordre d'une demi-heure.

5. Procédé de détoxication de terres polluées, notamment par des métaux lourds, **caractérisé en ce qu'**il consiste à mélanger aux terres polluées, par malaxage profond, des cendres volantes d'origine charbonnière, issues d'une combustion, dans une chaudière à lit fluidisé circulant, à une température de l'ordre de 850°C, lesquelles cendres ont une granulométrie telle qu'au minimum 80% en poids passe au tamis ayant une ouverture de maille de 80 µm, le pourcentage de cendres utilisé correspondant aux quantités de métaux lourds présents dans ces terres.

6. Procédé selon l'une quelconque des revendications 1 à 4, **caractérisé en ce qu'**il est utilisé pour déshydrater et/ou stabiliser des boues de station d'épuration ou des boues issues d'ateliers de traitement de surfaces.

7. Installation pour la mise en oeuvre du procédé selon l'une quelconque des revendications 1 à 4, **caractérisée en ce qu'**elle comprend des moyens à débit réglable (1-6) assurant l'alimentation en cendres, des moyens à débit réglable (7,8) assurant l'alimentation en milieu liquide ou semi-liquide à traiter, lesdits moyens d'alimentation (1-6 ; 7,8) alimentant une cuve de brassage (9) adaptée à alimenter un décanteur centrifuge (22), pourvu d'une évacuation (14') du liquide du milieu traité et d'une évacuation séparée (16 ; 18') des cendres, sur lesquelles se sont, le cas échéant, fixés les métaux lourds que le milieu traité contenait éventuellement, lesdites cendres étant mélangées aux matières solides que contenait en suspension ledit milieu, des moyens de recirculation en circuit fermé (19', 17') étant prévus pour maintenir une circulation ininterrompue dans la cuve de brassage, lorsque l'installation est en état de veille.

8. Installation mobile pour la mise en oeuvre du procédé selon l'une quelconque des revendications 1 à 4, **caractérisée en ce qu'**elle comprend, en combinaison ;
des moyens de stockage (1) de cendres et d'alimentation (2-6) en cendres et des moyens d'alimentation (7,8) en milieu liquide ou semi-liquide à traiter,
un malaxeur (9) adapté à être alimenté par lesdits moyens d'alimentation (2-8)
un décanteur centrifuge (22) adapté à être alimenté par ledit malaxeur (9) et pourvu d'une évacuation (14) du liquide du milieu traité et d'une évacuation séparée (18') des cendres, sur lesquelles se sont, le cas échéant, fixés les métaux lourds que le milieu traité contenait éventuellement, lesdites cendres étant mélangées aux matières solides que contenait en suspension ledit milieu,
des moyens de commande automatique des opérations d'alimentation, de malaxage, de centrifugation et d'évacuation précitées, et
un groupe électrogène adapté à alimenter en énergie ladite installation.

9. Installation selon la revendication 8, **caractérisée en ce qu'**elle comporte en outre un dispositif de moulage de blocs de cendres, alimenté par l'évacuation (18') des cendres.

## Claims

1. Process for the treatment of liquid or semiliquid media, by placing in contact the medium to be treated with fly ash originating from coal burning, produced by burning, in a circulating fluidized bed boiler, at a temperature of the order of 850°C, which ash have a particle size such that at least 80% by weight passes through a screen with a mesh opening of 80 µm, **characterized in that** it consists in using from 0.2 to 2% by volume of ash based on the volume of the medium to be treated.

2. Process according to claim 1, **characterized in that** it consists, after treatment of the medium with the said ash, in subjecting the treated medium to a centrifugation in order to separately recover the liquid of the treated medium and the ash on which, if necessary, the heavy metals and hydrocarbons, more particularly the polycyclic aromatic hydrocarbons, which the treated medium possibly contained, have been bound, the said ash being mixed with the solid matter which the said medium contained in suspension.

3. Process according to claim 2, **characterized in that** it consists in placing the medium to be treated and the ash in contact for a period of between 10 minutes and one hour.

4. Process according to claim 3, **characterized in that** it consists in placing the medium to be treated and the ash in contact for a period of the order of half an hour.

5. Process for the detoxification of soils which are contaminated, especially with heavy metals, **characterized in that** it consists in mixing with the contaminated soils, by deep blending, fly ash originating from coal burning, produced by burning, in a circulating fluidized bed boiler, at a temperature of the order of 850°C, which ash have a particle size such that at least 80% by weight passes through a screen with a mesh opening of 80 µm, the percentage of used ash corresponding to the quantities of heavy metals present in these soils.

6. Process according to any one of claims 1 to 4, **characterized in that** it is used for the dehydration and/or the stabilization of sludge from purification stations or sludge produced by surface treatment workshops.

7. Plant for making use of the process according to any one of claims 1 to 4, **characterized in that** it includes adjustable flow-rate means (1-6) ensuring the feeding of ash, adjustable flow-rate means (7, 8) ensuring the feeding of liquid or semiliquid medium to be treated, the said feeding means (1-6 ; 7, 8) feeding a stirring vessel (9) suitable for feeding a centrifugal separator (22) provided with a removal (14') of the liquid from the treated medium and with a separate removal (16 ; 18') of the ash on which, if necessary, the heavy metals which the treated medium possibly contained have been bound, the said ash being mixed with the solid matter which the said medium contained in suspension, means for recirculating in a closed circuit (19', 17') being provided to maintain an uninterrupted circulation in the stirring vessel when the plant is in a standby state.

8. Mobile plant for making use of the process according to any one of claims 1 to 4, **characterized in that** it includes, in combination :
means for storing (1) ash and for feeding (2-6) ash and means for feeding (7, 8) liquid or semiliquid medium to be treated,
a blender (9) adapted to being fed by the said means of feeding (2-8),
a centrifugal separator (22) adapted to being fed by the said blender (9) and provided with a removal (14) of the liquid of the treated medium and with a separate removal (18') of the ash to which the heavy metals which the treated medium possibly contained have, where appropriate, been bound, the said ash being mixed with the solid matter which the said medium contained in suspension,
means for automatic control of the above-mentioned feeding, blending, centrifugating and removal operations, and
an electricity generating unit suitable for supplying the said plant with energy.

9. Plant according to claim 8, **characterized in that** it additionally comprises a device for moulding ash blocks, fed by the removal (18') of the ash.

## Patentansprüche

1. Verfahren zur Behandlung von flüssigen oder halbflüssigen Medien durch Inkontaktbringen des zu behandelnden Mediums mit von Kohle stammender Flugasche, die von einer Verbrennung in einem Kessel mit zirkulierendem Wirbelbett bei einer Temperatur von etwa 850°C kommt, wobei die Asche eine solche Korngröße besitzt, dass mindestens 80 Gew.-% ein Sieb mit einer Maschenweite von 80 µm passiert, **dadurch gekennzeichnet, dass** es darin besteht, dass 0,2 bis 2 Vol.-% Asche, bezogen auf das Volumen des zu behandelnden Mediums, verwendet wird.

2. Verfahren nach Anspruch 1, **dadurch gekennzeichnet, dass** es darin besteht, dass nach Behandlung des Mediums mit der Asche das behandelte Medium einer Zentrifugierung unterzogen wird, um die Flüssigkeit des behandelten Mediums und die Asche getrennt zu gewinnen, an der sich ggf. die Schwermetalle und/oder die Kohlenwasserstoffe, insbesondere die polyzyklischen aromatischen Kohlenwasserstoffe, die das behandelte Medium ggf. enthielt, fixiert haben, wobei die Asche mit den Feststoffen gemischt ist, die das Medium in Suspension enthielt.

3. Verfahren nach Anspruch 2, **dadurch gekennzeichnet, dass** es darin besteht, dass das zu behandelnde Medium und die Asche während einer Zeit zwischen 10 Minuten und einer Stunde in Kontakt gebracht werden.

4. Verfahren nach Anspruch 3, **dadurch gekennzeichnet, dass** es darin besteht, dass das zu behandelnde Medium und die Asche während einer Zeit von etwa einer halben Stunde in Kontakt gebracht werden.

5. Verfahren zur Entgiftung von insbesondere mit Schwermetallen verunreinigter Erde, **dadurch gekennzeichnet, dass** es darin besteht, dass mit der verunreinigten Erde durch kräftiges Kneten von Kohle stammende Flugasche gemischt wird, die von einer Verbrennung in einem Kessel mit zirkulierendem Wirbelbett bei einer Temperatur von etwa 850°C kommt, wobei die Asche eine solche Korngröße besitzt, dass mindestens 80 Gew.-% ein Sieb mit einer Maschenweite von 80 µm passiert, wobei der verwendete Prozentsatz an Asche den in dieser Erde vorhandenen Schwermetallmengen entspricht.

6. Verfahren nach einem der Ansprüche 1 bis 4, **dadurch gekennzeichnet, dass** es zum Dehydratisieren und/oder Stabilisieren von Reinigungsstationsschlamm oder von Schlamm von Oberflächenbehandlungswerkstätten verwendet wird.

7. Anlage zur Durchführung des Verfahrens nach einem der Ansprüche 1 bis 4, **dadurch gekennzeichnet, dass** es Mittel (1-6) mit einstellbarem Durchsatz für die Versorgung mit Asche und Mittel (7,8) mit einstellbarem Durchsatz für die Versorgung mit zu behandelndem flüssigen oder halbflüssigen Medium aufweist, wobei diese Versorgungsmittel (1-6;7,8) einen Rührbehälter (9) versorgen, der dafür ausgelegt ist, eine Zentrifugalklärvorrichtung (22) zu versorgen, die mit einem Austritt (14') für die Flüssigkeit des behandelten Mediums und mit einem getrennten Austritt (16;18') für die Asche versehen ist, an der sich ggf. die Schwermetalle, die das behandelte Medium ggf. enthielt, fixiert haben, wobei diese Asche mit den Feststoffen gemischt ist, die das Medium in Suspension enthielt, wobei Mittel (19',17') zur Rezirkulierung in geschlossenem Kreis vorgesehen sind, um einen ununterbrochenen Umlauf in dem Rührbehälter aufrecht zu erhalten, wenn die Anlage im Wartezustand ist.

8. Bewegliche Anlage zur Durchführung des Verfahrens nach einem der Ansprüche 1 bis 4, **dadurch gekennzeichnet, dass** sie folgendes in Kombination aufweist:
Mittel (1) zum Speichern von Asche und zur Versorgung (2-6) mit Asche und Mittel (7,8) zur Versorgung mit zu behandelndem flüssigen oder halbflüssigen Medium,
eine Knetvorrichtung (9), die dafür ausgelegt ist, durch die Versorgungsmittel (2-8) versorgt zu werden,
eine Zentrifugalklärvorrichtung (22), die dafür ausgelegt ist, durch die Knetvorrichtung (9) versorgt zu werden, und mit einem Austritt (14) für die Flüssigkeit des behandelten Mediums und mit einem getrennten Austritt (18') für die Asche versehen ist, an der sich ggf. die Schwermetalle fixiert haben, die das behandelte Medium ggf. enthielt, wobei die Asche mit den Feststoffen gemischt ist, die das Medium in Suspension enthielt,
Mittel zur automatischen Steuerung der Arbeitsgänge Versorgung, Kneten, Zentrifugieren und Abführen und
einen Generatorsatz, der für die Energieversorgung der Anlage ausgelegt ist.

9. Anlage nach Anspruch 8, **dadurch gekennzeichnet, dass** sie außerdem eine Vorrichtung zum Formen von Ascheblöcken aufweist, die durch den Austritt (18') für die Asche versorgt wird.
